# EUROPEAN PATENT APPLICATION

(11) **EP 1 400 269 A1**
(43) Date of publication of application: **24.03.2004**
(21) Application number: 02078889.9
(22) Date of filing: 19.09.2002
(51) Int. Cl.: B01D 35/147, B01D 35/30, B01D 29/15

(54) **Filter device and arrangement for replacing a conventional filter by a micro filter in an in line filtering configuration**

(71) Applicant: NTZ Nederland BV, 3047 BP Rotterdam (NL)
(72) Inventor: Nieuwland, Pierre, 3047 BP Rotterdam (NL); Schaerlaeckens, Willy, 3047 BP Rotterdam (NL); Borger, Ron, 3047 BP Rotterdam (NL)

(57) **Abstract**

Filter device (1) in particular for in-line oil filtering, the device may be applied in combination with an oil cooler device (2), and comprising a filter housing (16) and a lid part (17), an oil inlet port (3) situated radially outside a filter part (5; 20; 20A-20D) for radial flow filtering of oil, and an outlet port (9) in connection with an interior space (21) of said filter part. The filter part (5; 20; 20A-20D) has a radial thickness larger than the radial thickness of its interior space, while the axial end faces (30) of the filter part being formed by the filtering means of said part, and the device (1) being provided with internal, essentially flattened filter end face (20F) contacting faces (14F, 24F, 16AF, 16BF, 17F) for axially closing a passage of oil, and having a diameter matching that of the filter part.

## Description

The present invention relates to a filter device as defined in the preamble of claim 1.

Such devices are generally known and commonly are provided with a filter part for filtering particles from oil that has contacted rotational parts such as in transmissions, and which even may have been used for lubricating engines. With nowadays increase in engine powers, the increased use of automatic transmissions with torque converters, and with the increasing refinement in valve components within such hydraulic systems it has become a desire to have refined the filtration of the oil to a considerably increased amount, i.e. by so called micro filtration. Such desire also emanates from a public convenience desire of not needing to change oil in cars, at least to have such need to a much lesser extend.

Micro filtration as such, and its effect as compared to conventional filtering is know per se, e.g. from SAE paper 2001-01-0867 "Automatic transmission hydraulic system cleanliness - the effects of operating conditions, measurement techniques and high efficiency filters", which document is hereby regarded included. Micro filters per se are also know, e.g. from international patent application PCT/NL00/00530 which is also regarded included. The known micro filter consists of radially wound more or less relatively highly compressed cellulose fibres. This type of micro filter is suitable for and known from application in a so called by pass configuration. In such a configuration the original filter of the hydraulic system remains in its original position in the flow system, i.e. remains in a so called in line arrangement, while independent from the main hydraulic stream, an auxiliary hydraulic loop is created, in which the micro filter is incorporated. The auxiliary loop may e.g. consist of only a minor part of the entire hydraulic flow, e.g. 10%. Yet, in this manner, over time this configuration effects a gradual decrease of degree of contamination of the oil up to the level of the filtering grade the micro filter. With a micro filter as known, a fill for life for passenger vehicles may be accomplished, especially since a large amount of filtered particles may be accommodated in the filter due to a relatively extremely large radial thickness of the filter material on the one hand, and on the other hand because a low degree of contamination of oil tends to slow down further contamination thereof. The requirement for an additional hydraulic flow and an additional filter device, thus for increased initial costs, has in automotive applications up to now hampered wide spread adoption of the micro filter, despite its advantages.

It is therefore an object of the present invention to provide a solution enabling the use of a micro filter in an in line configuration, be it with lowest amount of effort, with lowest amount of initial costs, or with optimised functionality of the micro filter. According to the invention such has been realised with the measures as defined in the characterising portion of claim 1.

With a device according to claim 1, a micro filter may effectively be incorporated in an existing housing for an in line arrangement, guaranteeing a sufficient flow by a micro filter through reduced resistance of a relatively thin radial thickness, yet of a sufficiently-large body thickness to realise a micro filtration at a relatively long oil changing time interval, at a filtration degree that has at least shifted towards the least fine end of an interval of typical micro filtration. With the device being provided with internal, essentially flattened filter end face contacting faces for axially closing a passage of oil, having a diameter matching that of the filter part, it has become suited for direct and correct application of the micro filter parts of the kind preferred by the invention, while still a sufficient amount of filter material is included in the device.

In accordance with an elaboration of the invention, with an oil passage closing face integrated in a housing part, an overall economic and functionally improved device is achieved. In this respect, if an oil passage closing face is integrated in a housing wall part having a thickness of more than twice the thickness of the majority of the wall part of a relevant unit of the housing, an initially cost effective and relatively easily to implement solution is provided, in that only a tooling part for shaping the interior of a housing part needs to be adapted by taking away material from it. However, in accordance with an even further elaboration of the invention, the closing face is integrated in an insert member fitting irregularities in shape of a relevant part of the housing at an axial side of the insert opposing the closing face, and preferably being provided with an O-ring corresponding to the largest diameter of the insert member. In such an elaboration of the invention, an aim of the invention is achieved with lowest possible effort at both end user and manufacturer, since such measure enables the use of a micro filter by simple replacement a conventional filter by a micro filter.

In a further aspect of the invention, micro filters of a relatively very fine filtering grade, as well with a relatively high filtering efficiency may be applied by using a device which is at least at one end provided with a separate oil flow closing member contacting an end face of the filter part at one axial end and contacting a housing part via a spring loaded means. The use of such arrangement enables the passage of oil between the end faces of filter and closing member at oil pressures higher than the spring pressure, thus creating the possibility a by pass functionality of oil, so that within a structure for an inline filtering arrangement, a by pass functionality is created, realising a sufficient oil flow at a relatively advanced level of micro filtration, which has become possible through the by pass functionality. Thus, in accordance with an important aspect of the invention, an improved Filter device is realised in that the filtering device is provided with a by pass means, such that during operation of any system in which the device is incorporated, a minimum flow of oil through the filter device is secured by said by pass means.

In one advanced version of such by pass means including filter device, the by pass means is formed by an aperture such as a bore, provided in a closing member connecting the space in the filter device exterior to the filter part to an interior space of said filter part for receiving oil radially passed through the filter and for receiving any oil passed through said aperture. In this way the by pass flow may be better controlled, while leaving the closure of the axial end faces in tact at all time, which is of advantage because any debris gathered here tends to loosen relatively easily, so that part of the filtered material would otherwise, be it with the security of return into the filter over time, re- entered into the oil flow. This solution secures a base flow of oil, while at increasing operating pressures, a relatively larger part of the flow passes through the micro filter

In yet another embodiment of the filter device according to the invention, the by pass means comprises a pressure dependent valve means situated in, or connecting to said aperture, said valve means at low oil pressures being in a closed mode, while changing to an increasing opened position in relation to an increasing actual oil pressure. Preferably this way of arranging a by pass according to the invention, is realised with an elastically deformable means, having an internal passage opening up at increasing oil pressure against an internal pressure of the valve material, in particular resisting said elastically deformation with increased force at increased amount of deformation. With such manner of by pass arrangement, a flow of oil is guaranteed in a previously describe controlled manner at relatively high operating pressures.

The invention will now be elucidated further along a drawing in which:
Figure 1 schematically represents a filter device integrated with an oil cooler device;
Figure 2 represents a cross section of a first modification of a filter device according to the invention, allowing the replacement of a conventional filter part by an e.g. cellulose fiber based, ultra fine grade filter, i.e. within the existing housing of said conventional filter, enabling both after sales replacement and factory based replacement;
Figure 3 and 4 relate to a filter device with cost a costs optimised factory modification of the interior of a conventional filter housing, enabling the manufacturers application of an ultra fine filter part;
Figure 5 and 6 relate to a filter device with a functionally optimised modification of the interior of a conventional filter housing, enabling the manufacturers application of an ultra fine filter part;
In the figures, identical reference numbers relate to identical or at least comparable technical features.

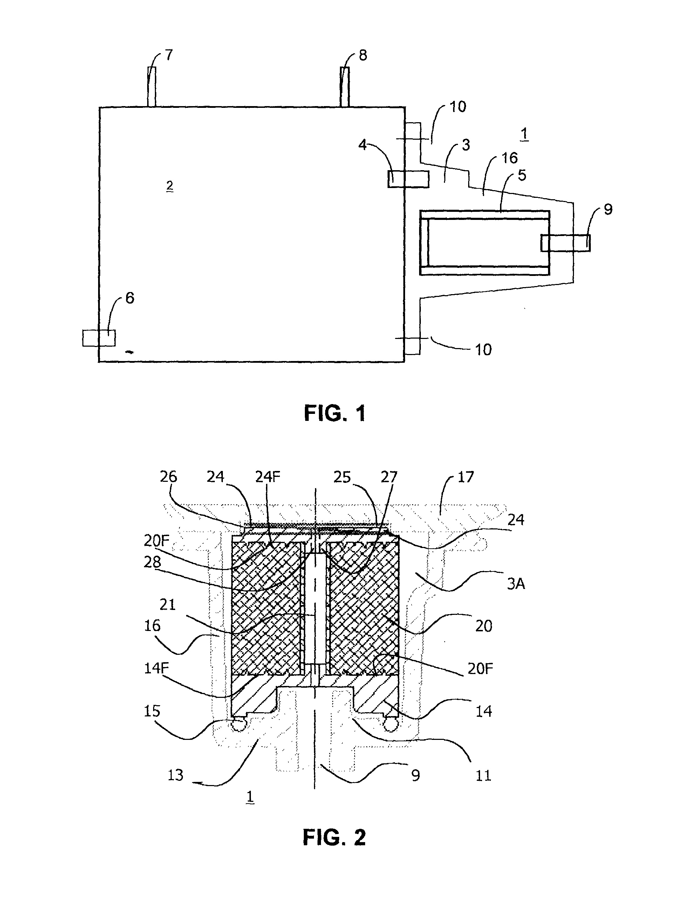

Figure 1 schematically represents a filtering device 1, applied in combination with an oil cooling device 2. The device 1 is is provided with a housing 3, opened at one side that is pressingly attached, here by bolts 10, to a cooler device 2. It may either be connected directly to the housing of the cooler 2, or indirectly via a base plate not depicted, to which both devices are than attached. The filter device 1 is fed via an inlet port 3 connected via a bore 4 to an outlet port of the cooler device. The cooler receives heated oil, e.g. by an engine or a transmission, via an inlet port 6. The oil is cooled while being fed through the cooler device, which is in turn cooled by a preferably liquid cooling agent, running through a separate channel system, having an inlet port 7 and an outlet port 8. The cooled oil received by the filter device 1 is radially forced through the cylindrically shaped filter part 5 of which one axial end is closed, while the other end connects to a discharge port of the filter device. The device is provided with tightening means in the form of bolts 10, which has the advantage that a filter part 5 within the housing may be clamped against the lid without the latter being possibly affected by any rotational movement. However, the lid may in principle also e.g. be connected to the house by a threaded provision for a mutually screwed connection.

Figure 2 more in detail depicts a cross section of the fitter device 1 of figure 1, however fitted with an ultra high efficiency filter for micro filtration within a generally known housing as suited for a conventional, e.g. in line filter, typically allowing a high throughput of oil and capable of filtering particles of particles of e.g. 20 µm and larger. Micro-filtration typically is capable of filtering particles of 0,5 µm and larger. Rather than at conventional filters, which only, or at least mainly are based on a sieving principle, this result is possible since micro filtration is based both on sieving and on a polarity or binding principle where contaminations are bound to fibres. In casu the filter applied is capable of filtering particles of 0,5 um and up. One type of micro filter that may be used for the present purpose is a cellulose based filter. The housing for such conventional filter part shows an outlet port 9 accommodated in a tube shape 10, integrally shaped with a thickened support part 11 of the relevant wall part 12 of the housing, in casu the wall part 13 oriented axially in relation to the cylindrical filter part. In conventional application this support part 11 functions as a support for both an O-ring fitting the transition from the support base to the tube part 10. In such conventional application The O-ring in turn supports the relevant axial end of the filter part. The inlet port 3, associated with a bore or tube 4 not depicted in this figure, is provided in a locally widened housing part 3A of the filter device. The bore or tube 4 may be provided either in the lid part 17 of the housing or in the main housing part 16.

In the embodiment according to figure 2, the use of a micro filter within the structure adapted for receipt of conventional, in line oil filters is enabled by the provision of a rigidly formed filler part 14 and a large diameter O-ring fitting into the space between the thickened wall part 11 and a radial housing part 16, filling the space between the axial wall part. The filler part 14 simultaneously forms an axial end closure to the micro filter part 20. An axial end wall of the filter part stretches in a plane oriented transversely to the axial direction of the filter part. The filter part 20 is formed with a filter of which the radial thickness is substantially larger than the radius of the cylindrical inner space 21 of the filter part. The central space 21 is formed by a perforated tube part 22 forming an internal wall of the filter part 20. The other axial end of the filter part is also closed for oil passage by an other end closure member 24, also rigidly shaped and also provided separate from the filter part 20. The closure members 14, 24 are pressed against the relevant end faces of the filter part under the influence of a rigid connection between the filter housing and relevant wall part 17 associated with the cooler device 2, and of a close tolerance fitting of the relevant parts, thereby relying on a fractional axial deformation capacity of such cellulose material based filter part. An advantage of the current filtering arrangement is that the housing 16 may entirely remain unchanged. This in turn enables both the after market application of a micro filter 20 and an easy to implement factory mounting of a micro filter 20.

Also for accommodating less strict tolerances, thereby reducing manufacturing costs, a spring member 25 may be provided between the wall part 17 and the closure member 24. For the purposes of enhancing proper positioning of the filter part 20, a dimple 26 may provided in the wall part 17, receiving part of the closure element and preferably the spring device 25. In the depicted sophisticated embodiment of this feature, the closure element is provided with a small, axially exterior part that is of radially smaller width, such that the spring element may be received and straight guided by the thus created opening or groove between the dimple and said closure part. Preferably the spring is of a diameter at least almost corresponding to the outer diameter of the closure element 24, which in turn, the other closure member 14, has a diameter corresponding to that of the filter part. In this manner a relatively thick and highly loadable spring may be accommodated. The arrangement with said dimple 26 provision also positively influences the axial length of the filter part 20. Both closure elements are preferably provided with a generally cylindrical notch 27 fitting the internal space 23 of the filter device. The notch 27 of the closure member 14 connecting to the outlet port 9 is provided with a central bore for oil discharge. Especially in case the device is provided with a spring means 25, the closure members 14, 24 and the contacting faces 16AF and 16BF as described at the following figures, are preferably provided with concentric ribs which are pressed into the material of the end face 20F of the filter part 20.

In accordance with a further aspect of the invention, the filtering device is fitted with a spring member 25, while the relevant, outlet 9 opposing closure member 24 may also be provided with a bore, either fully open or fitted with a pressure dependent valve member known per se and not depicted in the figure. The filter device 1, when thus provided with a bore only, is adapted as a by pass filter system, securing a base flow of oil that is directed through the bore. At relatively high pressures, when the oil flow may not fully pass through the bore, it passes radially through the filter part 20. In this manner the filter device functions as a by pass filtering system at relatively high pressures only. Yet, in practice if at least a part of the oil passes through the micro filter, the oil will in time gradually become entirely filtered, i.e. will become cleaner up to the level determined by the chosen filtering grade. The diameter of the bore may be varied in accordance with the desired base flow and the desired percentage of oil passing through the filter part 20 per unit of time, taking into account the chosen specifications of the filter part 20.

The filter device according to this further aspect of the invention may also be provided with a valve member fitted to the above mentioned bore. In this manner a filter device is created for securing an additional oil passage in addition to the oil passage through the filter part 20, given a certain pressure at which the oil is provided to the filter part 20. The valve member accommodated according to the invention opens wider with increasing pressure. Such pressure dependent valve member enhances certain applications or certain operating conditions where a micro filter may not allow for a sufficient flow as often required by so called in-line filter applications. The filter device according to the invention then operates as a by-pass filter, accommodated in a typical in-line filtering arrangement. Typically such valve member known per se is composed of an elastically deformable synthetic material, having a tube part with an inner cylindrical opening at one end, gradually changing into a rectangular like, and subsequently line like opening at the other end, which without internal oil pressure acting on it is closed by internal wall parts being pushed against each other. This end part of the tube may open under oil pressure under a resistance force acting against elastic deformation emanating from the combination of the particular shape and the elastically deformable nature of the material. Therefore, depending on the desired guaranteed flow rate at any pressure level, depending on the specifications of the filter, such as radial thickness, axial length and filtering grade, the valve member may be designed in accordance with a manufacturers whish.

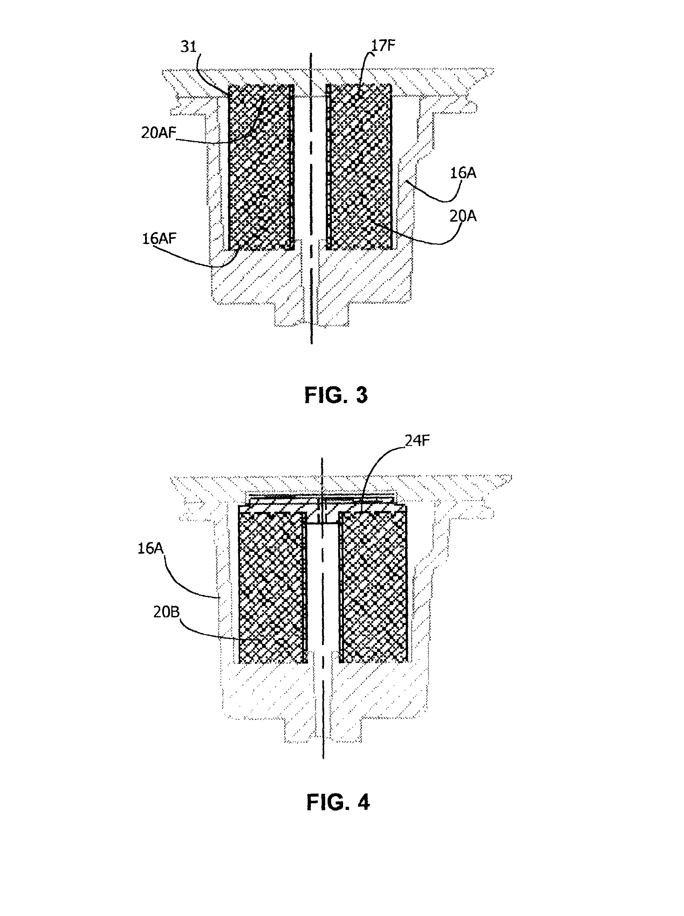

Figure 3 depicts an elaborated embodiment of a conventional housing for accommodating a micro filter device. The embodiment incorporates the advantage of reduced material cost at a minimum adaptation of a manufacturing tool vis a vis a relatively high functionality of the filter part 20. The improved functionality of the current device is in particular related to an increased effective axial length of the filter part within the prescribed outside boundaries of the housing. By a measure incorporating a relatively easy to perform removal of material from a tool for shaping the interior of the housing, the lower side of the housing is formed at least virtually flat, such that it may function as a closure member to the relevant axial end face of the filter part. This embodiment is preferably combined with the creation of an e.g. ring like dimple in the cooler housing associated plate 17, such that the dimple functions both as a closure member to the filter part 20 and as a positioning provision. Apart from the advantage of elongating the filter part 21, no further parts such as O-rings or separate closure members are required, reducing manufacturing effort and costs.

Figure 4 represents an embodiment in accordance with the main measures taken in the design of figure 3, however now provided with one separate closure member 24, provided at the upper side of the filter part 20A. At the expense of a slightly lower axial length of the filter part 20A, the functional possibilities of the use of an open bore in said member or of the application of a valve member are introduced, both as explained along the embodiment of figure 2. Still no O-ring and only one closure member is needed at using this feature of the invention.

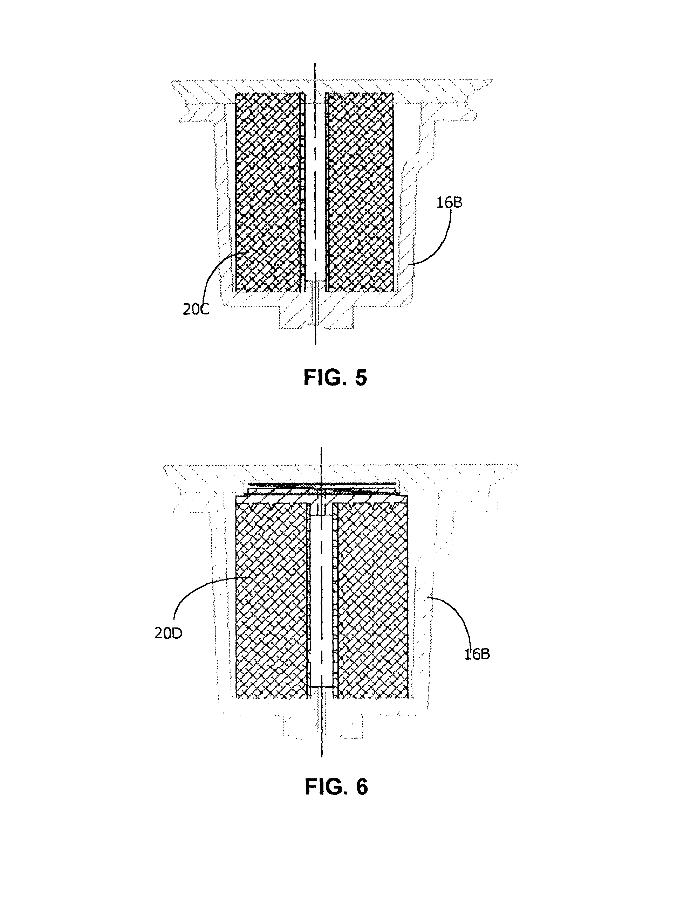

In figures 5 and 6 an in view of the designs of figures 3 and 4 respectively further elaborated version of the filter device according to the invention is depicted. It requires a new, i.e. enlarged shaping tool for the interior of the filter housing. However, the advantage of such, in comparison to the previous, relatively costly measure, is an optimized use of axial length of micro filter, which is advantageous because it effects an increased oil throughput of the device, which is important at an in-line filtering arrangement.

The invention, apart from the following claims, also relates to the preceding description and all details and aspects in the drawing which are directly and unambiguously derivable there from, at least by a man skilled in the art.

## Claims

1. Oil Filtering device (1) for filtering oil used in rotational devices such as engines and transmission, in particular suitable for incorporation in an in-line oil filtering configuration, the device e.g. possibly being applied in combination and in direct connection with an oil cooler device (2), and comprising a filter housing (16) and a lid part (17) of said housing (16), possibly forming part of or being associated with said possibly combined cooler device (2), tightening means (10) being provided for pressurised interconnection of said lid (17) and the housing (16), the device (1) comprising an oil inlet port (3) situated radially outside a filter part (5; 20; 20A-20D) for radial flow filtering of oil, and an oil outlet port (9) in connection with a cylindrical interior space (21) of said filter part (5; 20; 20A-20D), **characterised in that** the device (1) comprises a filter part (5; 20; 20A-20D) of which the radial thickness of its filter means is larger than the radial thickness of its interior space, the axial end faces (20F; 20AF-20DF) of the filter part (5; 20; 20A-20D) being formed by the filtering means of said part, and the device (1) being provided with internal, essentially flattened filter end face (20F; 20AF-20DF) contacting faces (14F, 24F, 16AF, 16BF, 17F), for axially closing a passage of oil, and having a diameter matching that of the filter part (5; 20; 20A-20D).

2. Filter Device (1) according to claim 1, **characterised in that** an oil passage closing face (16AF, 16BF) is integrated in a housing part (16A, 16B, 17).

3. Filter device (1) according to the previous claim, **characterised in that** an oil passage closing face (16AF, 16BF) is integrated in a housing wall part having a thickness of more than twice the thickness of the majority of the wall part of a relevant unit (16) of the housing (16, 17).

4. Filter device (1) according to claim 1 or 2, **characterised in that** the closing face is integrated in an insert member (14) fitting irregularities in shape of a relevant part (11) of the housing (16) at an axial side of the insert (14) opposing the closing face (14F), and preferably being provided with an O-ring corresponding to the largest diameter of the insert member (14).

5. Filter device (1) according to any of the previous claims, **characterised in that** the filtering device (1) is provided with a by pass means (25, 28), such that during operation of any system in which the device (1) is incorporated, a minimum flow of oil through the filter device (1) is secured by said by pass means.

6. Filter device (1) according to any of the preceding claims, **characterised in that** the device is at least at one end provided with a separate oil flow closing member (24), contacting an end face of the filter part at one axial end and contacting a housing part (17) via a spring loaded means (25).

7. Filter device (1) according to the previous claim, **characterised in that** the by pass means (28) in said device (1) is formed by an aperture (28) such as a bore, provided in a closing member (24), connecting the space in the filter device (1) exterior to the filter part (20, 20A-D) to an interior space (21) of said filter part for receiving oil radially passed through the filter and for receiving any oil passed through said aperture (28).

8. Filter device according to the previous claim, **characterised in that** the by pass means comprises a pressure dependent valve means situated in, or connecting to said aperture (28), said valve means at lowest oil pressures being in a closed mode, while changing to an increasing opened position in relation to an increasing actual oil pressure.

9. Filter device (1) according to the previous claim, **characterised in that** the pressure dependent valve means comprises an elastically deformable means, having an internal passage opening up at increasing oil pressure against an internal pressure of the valve material, in particular resisting said elastically deformation with increased force at increased amount of deformation.

10. Filter device (1) according to the previous claim, **characterised in that** the valve means is at least partly incorporated in said aperture (28) of an end face closure means (24).
